# EUROPÄISCHE PATENTSCHRIFT

(11) **EP 3 300 218 B1**
(45) Veröffentlichungstag und Bekanntmachung des Hinweises auf die Patenterteilung: **03.07.2019**
(21) Anmeldenummer: 16465538.3
(22) Anmeldetag: 22.09.2016
(51) Int. Cl.: H02K 3/52

(54) **KONTAKTRING, STATOR UND ELEKTROMOTOR**
CONTACT RING, STATOR AND ELECTRIC MOTOR
CONTACT TOURNANT, STATOR ET MOTEUR ÉLECTRIQUE

(43) Veröffentlichungstag der Anmeldung: 28.03.2018
(73) Patentinhaber: CPT Group GmbH, 30165 Hannover (DE)
(72) Erfinder: Popa, Alexandru, 240048 Rimnicu Vilcea (RO); Balint, Daniel-Iosif, 300682 Timisoara (RO); Albert, Eusebio-Marius, 300737 Timisoara (RO)

(56) Entgegenhaltungen:
- WO-A2-2011/082879
- DE-A1-102015 200 086
- DE-A1-102015 200 093

## Beschreibung

Die Erfindung betrifft einen Kontaktring zur Anordnung an einem Stator eines elektronisch kommutierten Elektromotors, einen Stator mit einem solchen Kontaktring und einen Elektromotor mit einem solchen Stator.

Ein solcher Kontaktring, der nach dem Stand der Technik mehrteilig ausgebildet sein kann, bildet eine Stromschiene, die einzelne Anschlussfahnen bzw. -elemente zur Anbindung an eine Spannungsquelle mit einer Stator-Wicklung verbindet. Die Anschlussfahnen können dabei einteilig mit dem Kontaktring bzw. den einzelnen Kontaktringelementen ausgebildet sein.

Aus der WO 2011/082879 A2, der DE 10 2015 200 093 A1, sowie der DE 10 2015 200 086 A1 sind Beispiele solcher Kontaktringe bekannt.

Eine Aufgabe der vorliegenden Erfindung ist es, einen Kontaktring bereitzustellen, der eine gegenüber den nach dem Stand der Technik bekannten Kontaktringen einfachere Herstellung und Montage ermöglicht.

Diese Aufgabe wird durch den Anspruch 1 gelöst, der einen mehrteiligen Kontaktring unter Schutz stellt. Vorteilhafte Ausführungsformen der Erfindung sind Gegenstand der Unteransprüche. Außerdem werden durch die Ansprüche 17 und 18 ein Stator mit einem solchen Kontaktring und ein Elektromotor mit einem solchen Stator unter Schutz gestellt.

Es wird ein Kontaktring zur Anordnung an einem Stator eines elektronisch kommutierten Elektromotors vorgeschlagen, wobei der Kontaktring aus zumindest zwei Paaren identischer, teilringförmiger, metallischer Elemente ausgebildet ist.

Dabei ist jeweils eines der Paare mit einer Anschlussfahne bzw. einem Anschlusselement zur Anbindung an eine Spannungsquelle verbunden. Außerdem erstreckt sich eines der beiden Elemente eines Paares von der Anschlussfahne in einer ersten normalen Lage in einer ersten Umfangsrichtung des Stators und das andere Element erstreckt sich von der Anschlussfahne in einer zweiten, gegenüber der ersten normalen Lage gewendeten Lage in einer zweiten Umfangsrichtung des Stators.

Dabei weisen die einzelnen Elemente eine Kröpfung auf, so dass sich zwei einander zugewandte Elemente des Kontaktrings zweier benachbarter Anschlussfahnen im Bereich der Kröpfung überlappen bzw. kreuzen, ohne sich zu berühren.

Unter der zuvor genannten normalen Lage im Sinne dieser Erfindung ist zu verstehen, dass das entsprechende Element derart angeordnet wird, so dass das entsprechend zugewandte Element der benachbarten Kontaktfahne in einer dazu gewendeten Lage angeordnet werden kann, ohne dass sich die beiden Elemente berühren.

Der vorgeschlagene Kontaktring bietet mehrere Vorteile. Zum einen setzt sich der Kontaktring aus identischen Elementen zusammen, so dass zwischen den Elementen nicht unterschieden werden muss. Dies vereinfacht sowohl die Fertigung als auch die Montage der Elemente.

Außerdem müssen die einzelnen Elemente nicht zeitgleich montiert werden. Auch dies vereinfacht die Montage der Elemente. Vielmehr können die einzelnen Elemente nacheinander angeordnet werden, indem erst ein Element in einer normalen Lage und dann das entsprechend zugeordnete Element der benachbarten Kontaktfahne in der dazu gewendeten Lage angeordnet wird. Alternativ dazu lassen sich grundsätzlich auch zuerst alle in der normalen Lage anzuordnenden Elemente anordnen und anschließend alle dazu gewendeten Elemente bzw. die entsprechend zugeordneten Elemente der benachbarten Kontaktfahnen in der dazu gewendeten Lage.

Ein weiterer Vorteil ist, dass die einzelnen Elemente bei der Anordnung nicht umgeformt werden müssen, um die besagten Überlappungen bzw. Kreuzungen in den Bereichen der einzelnen Kröpfungen auszubilden. Auch dies vereinfacht die Montage der Elemente.

Nach einer Ausführungsform überlappen sich die Kröpfungen der einander zugewandten Elemente in einem gemeinsamen Kröpfungsbereich komplementär. Dies vereinfacht die Montage und ermöglicht eine sehr kompakte Bauweise, die dazu beiträgt, Bauraum einzusparen.

Nach einer weiteren Ausführungsform ist der Kontaktring aus zumindest drei Paaren identischer, teilringförmiger, metallischer Elemente ausgebildet. Eine Ausbildung des Kontaktrings mit z. B. drei Paaren derartiger Elemente eignet sich für eine dreisträngige Stator-Wicklung, die gegenüber einer nur zweisträngigen Stator-Wicklung, für die sich eine Ausbildung des Kontaktrings mit zwei Paaren derartiger Elemente eignet, einen besseren Rundlauf eines Rotors des Elektromotors gewährleistet.

Die einzelnen Elemente des Kontaktrings können dabei zweckmäßigerweise als flache Elemente ausgebildet sein, deren breite Seiten zur Stirnseite des Stators ausgerichtet sind. Dies ermöglicht eine sehr kompakte Bauweise.

Die Kröpfung der einzelnen Elemente kann dabei zwischen einem Anschlussfahnenende und einem freien Ende des Elements ausgebildet sein. Die Kröpfung kann dabei in Längsrichtung des Stators ausgerichtet sein. Auch dies ermöglicht eine sehr kompakte Bauweise.

Nach einer Ausführungsform sind die einzelnen Elemente in einzelne Abschnitte unterteilt und weisen dabei auf:
- einen ersten radialen Abschnitt zur Anbindung an die Anschlussfahne,
- einen sich an den ersten radialen Abschnitt anschließenden ersten Umfangsabschnitt,
- einen sich an den ersten Umfangsabschnitt anschließenden, die Kröpfung aufweisenden Kröpfungsabschnitt,
- einen sich an den Kröpfungsabschnitt anschließenden zweiten radialen Abschnitt und
- einen sich an den zweiten radialen Abschnitt anschließenden zweiten Umfangsabschnitt zur Anbindung an die Stator-Wicklung.

Nach einer Ausführungsform liegen die einzelnen Abschnitte bis auf die Kröpfung des Kröpfungsabschnitts in einer Ebene. Dies ermöglicht eine sehr kompakte Bauweise und trägt dazu bei, Bauraum einzusparen. Der Kröpfungsabschnitt kann dabei gegenüber den übrigen Abschnitten tiefgezogen sein.

Da es sich um identische Elemente handelt, liegen auch die Kröpfungen der jeweiligen normal angeordneten Elemente in einer Ebene und die Kröpfungen der jeweiligen dazu gewendet angeordneten Elemente in einer anderen Ebene. Auch dies trägt zur kompakten Bauweise bei.

Ferner kann einer der beiden Umfangsabschnitte des Elements gegenüber dem anderen Umfangsabschnitt innenliegend angeordnet sein. Nach einer Ausführungsform ist der erste Umfangsabschnitt gegenüber dem zweiten Umfangsabschnitt innenliegend angeordnet. Auch dies trägt zur kompakten Bauweise bei.

Zur Anbindung an die Stator-Wicklung kann der zweite Umfangsabschnitt mit zwei Anschlussflächen, vorzugsweise mit zwei kreisförmigen Anschlussflächen versehen sein.

Jedes einzelne Element des Kontaktrings kann sich über einen Winkelbereich von ca. 100° bis 120° erstrecken, vorzugsweise über im Wesentlichen 115° erstrecken. In Bezug auf die zuvor genannte Ausbildung des Kontaktrings mit den drei Paaren derartiger Elemente sind die drei Paaren im Wesentlichen 120° zueinander versetzt angeordnet.

Jedes dieser Elemente kann ferner vorteilhafterweise als Stanzblechelement ausgebildet sein. Solche Stanzblechelemente lassen sich kostengünstig herstellen. Alternativ dazu können diese Elemente auch aus einem flachen Blech mittels eines Lasers herausgeschnitten sein.

Nach einer Ausführungsform sind die zwei einander zugewandten Elemente des Kontaktrings zweier benachbarter Anschlussfahnen gegeneinander elektrisch isoliert, indem im Bereich des ersten Umfangsabschnitts auf der dem Stator zugewandten Seite ein Isoliermittel vorgesehen ist, an welchem ein Wicklungsdraht der Stator-Wicklung anliegt. Dieses Isoliermittel unterbindet einen Kurzschluss zwischen diesen beiden stromführenden Elementen.

Das Isoliermittel kann dabei aus einem Kunststoff, vorzugsweise in der Gestalt eines U-Profils ausgebildet sein, welches stirnseitig am Stator angespritzt oder in den Stator eingeklipst sein kann.

Zusätzlich oder alternativ dazu kann das jeweilige Element zumindest im Bereich des ersten Umfangsabschnitts auch selbst isoliert sein, indem es entsprechend umspritzt wird.

Es wird ferner ein Stator eines elektronisch kommutierten Elektromotors mit einem Kontaktring der zuvor beschriebenen Art vorgeschlagen.

Außerdem wird Elektromotor mit einem Stator der zuvor beschriebenen Art vorgeschlagen.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen:
- Fig. 1: eine perspektivische Darstellung eines vorgeschlagenen Kontaktrings,
- Fig. 2: eine Anordnung des in Fig. 1 gezeigten Kontaktrings an einem Stator,
- Fig. 3: einen vergrößerten Ausschnitt der in Fig. 2 gezeigten Anordnung,
- Fig. 4: eine Darstellung eines Kontaktringelements in verschiedenen Ansichten,
- Fig. 5: zwei einander zugewandte Elemente des Kontaktrings zweier benachbarter Anschlussfahnen,
- Fig. 6: den in Fig. 1 gezeigten Kontaktring in einer Unteransicht,
- Fig. 7: den in Fig. 6 gezeigten Kontaktring in einer Vorderansicht,
- Fig. 8: einen Kontaktring mit ausgebeulten Anschlussflächen,
- Fig. 9: den in Fig. 8 gezeigten Kontaktring in einer perspektivische Darstellung,
- Fig. 10a: eine Anordnung eines weiteren Kontaktrings an einem Stator und
- Fig. 10b: die in Fig. 10a gezeigte Anordnung in einer Schnittdarstellung.

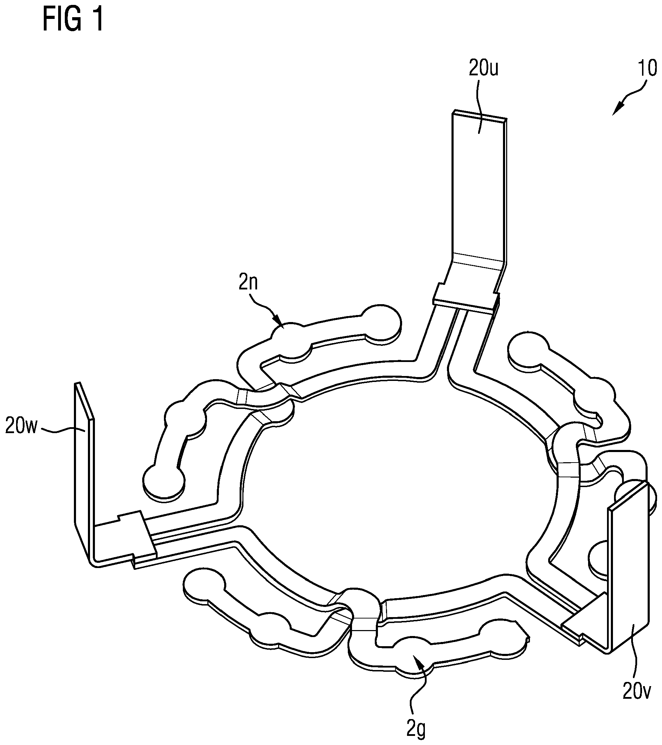

Fig. 1 zeigt einen Kontaktring 10, der als solcher einen stromführenden Körper darstellt, der über die Anschlussfahnen 20U, 20V, 20W mit einer - hier nicht dargestellten - Spannungsquelle verbindbar ist.

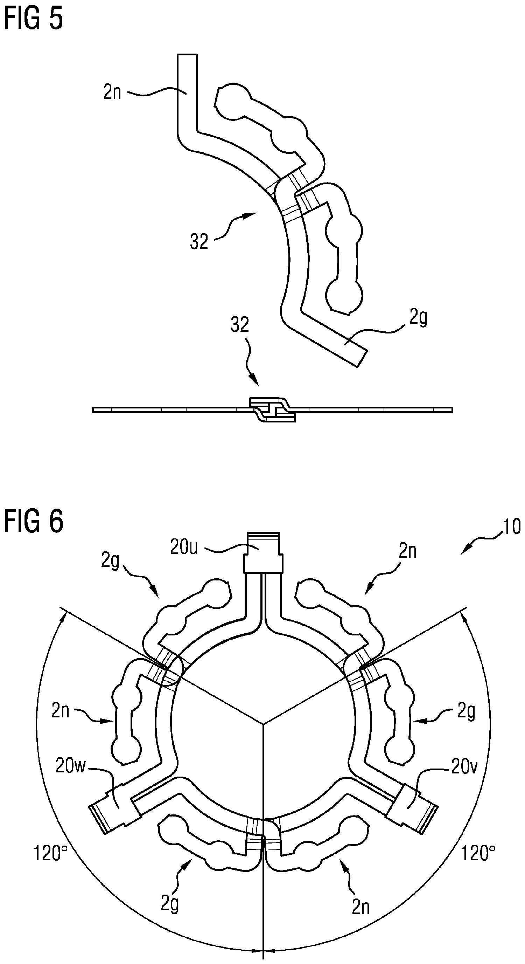

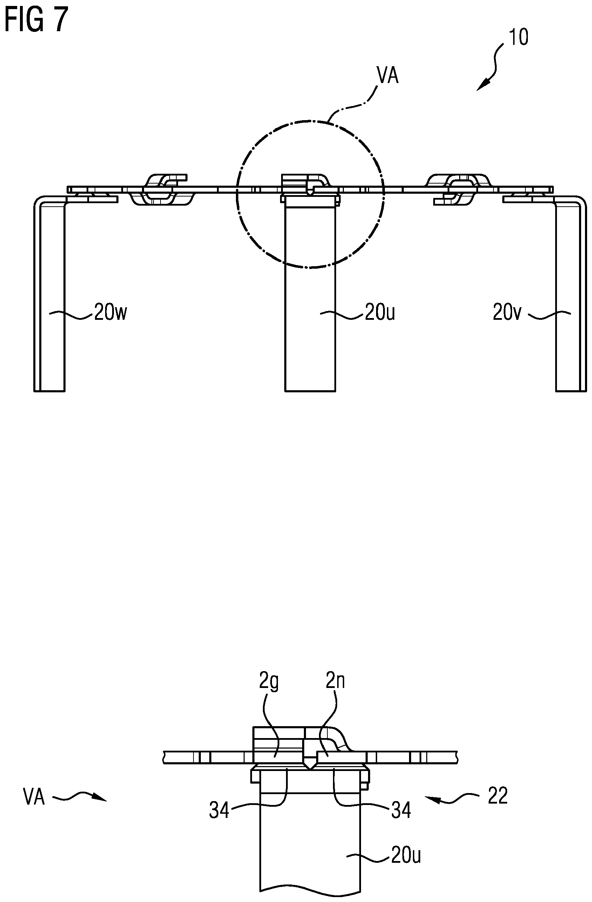

Der Kontaktring 10 setzt sich aus insgesamt sechs identischen, flachen, teilringförmigen, metallischen Elementen 2n, 2g bzw. drei Paaren identischer, flacher, teilringförmiger, metallischer Elemente 2n, 2g zusammen. Unter einem solchen Paar sind jeweils die beiden Elemente zu verstehen, die einer der drei dargestellten flachen, metallischen und L-förmigen Anschlussfahnen 20U, 20V, 20W zugeordnet sind. Die einzelnen Elemente 2n, 2g sind z. B. als Stanzblechelemente ausgebildet und mit den zugeordneten Anschlussfahnen 20U, 20V, 20W an der Verbindungsstelle 22 punktverschweißt. Fig. 7 zeigt die Schweißpunkte 34 an der Verbindungsstelle 22 in einer vergrößerten Ansicht VA. Die Anschlussfahnen 20U, 20V, 20W sind um 120° zueinander versetzt angeordnet, so dass auch die jeweiligen Paare um 120° zueinander versetzt angeordnet sind (vgl. Fig. 6).

Fig. 1 zeigt ferner, wie die einzelnen Elemente 2n, 2g zueinander angeordnet sind. Während sich eines der beiden Elemente 2n eines einer Anschlussfahne 20U, 20V, 20W zugeordneten Paares in einer ersten normalen Lage in einer ersten Umfangsrichtung erstreckt, erstreckt sich das andere Element 2g von der Anschlussfahne 20U, 20V, 20W in einer zweiten gegenüber der ersten normalen Lage gewendeten Lage in einer zweiten Umfangsrichtung.

Dies bedingt, dass sich zwei einander zugewandte Elemente 2n, 2g zweier benachbarter Anschlussfahnen 20U, 20V, 20W im Bereich einer Kröpfung 8 überlappen, ohne sich zu berühren. Die Kröpfungen 8 überlappen sich dabei komplementär in einem gemeinsamen Kröpfungsbereich 32 (vgl. Fig. 1, Fig. 5). Auch diese Kröpfungsbereiche 32 sind um 120° zueinander versetzt angeordnet (vgl. Fig. 6).

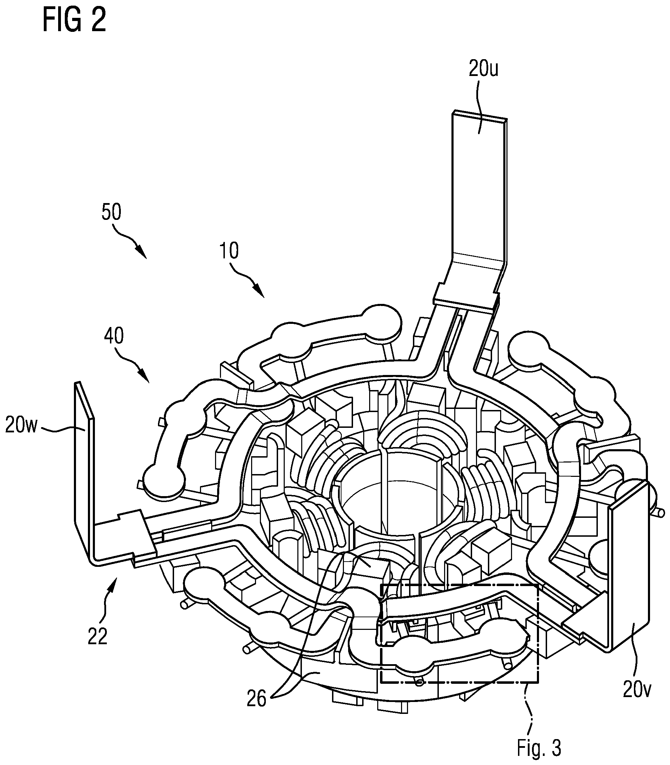

Die einzelnen Kröpfungen 8 sind zwischen einem Anschlussfahnenende 3 und einem freien Ende 18 des Elements 2n, 2g ausgebildet. In einer Einbaulage des Kontaktrings 10 sind diese Kröpfungen in Längsrichtung eines Stators 40 ausgerichtet (vgl. Fig. 2).

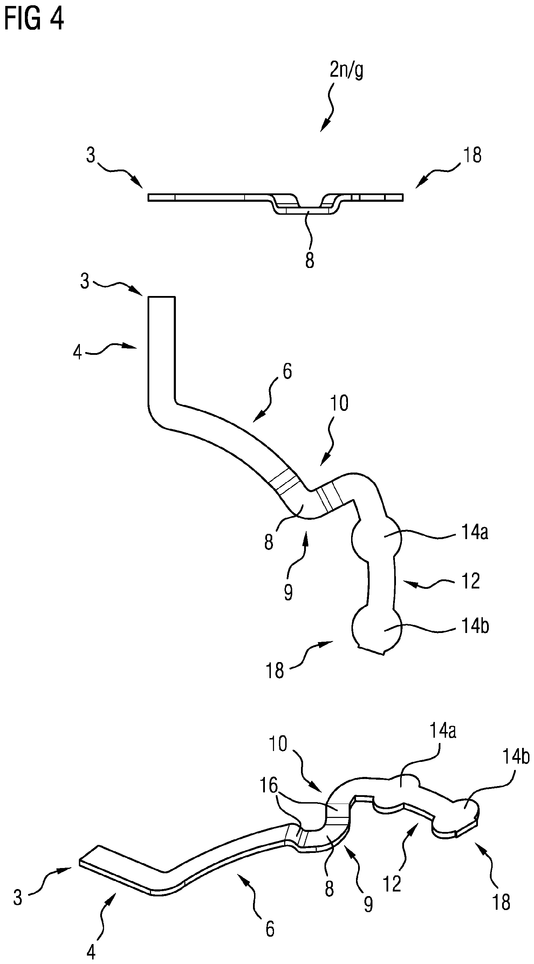

Jedes einzelne Element 2n, 2g unterteilt sich in mehrere Abschnitte und weist dabei im Einzelnen auf (vgl. Fig. 4):
- einen ersten radialen Abschnitt 4 zur Anbindung an eine der Anschlussfahnen 20U, 20V, 20W,
- einen sich an den ersten radialen Abschnitt 4 anschließenden ersten Umfangsabschnitt 6,
- einen sich an den ersten Umfangsabschnitt 6 anschließenden, die Kröpfung 8 aufweisenden Kröpfungsabschnitt 9,
- einen sich an den Kröpfungsabschnitt 9 anschließenden zweiten radialen Abschnitt 10 und
- einen sich an den zweiten radialen Abschnitt 10 anschließenden zweiten Umfangsabschnitt 12 zur Anbindung an zwei Spulenwicklungen 28a, 28b.

In Bezug auf den Kontaktring 10 bewirken die beiden radialen Abschnitte 4, 10, dass der erste Umfangsabschnitt 6 gegenüber dem zweiten Umfangsabschnitt 12 innenliegend angeordnet ist.

Die einzelnen Abschnitte 4, 6, 10, 12 liegen bis auf den Kröpfungsabschnitt 9 in einer Ebene (vgl. Fig. 5, Fig. 7). Der Kröpfungsabschnitt 9 ist gegenüber den übrigen Abschnitten 4, 6, 10, 12 tiefgezogen und bildet somit die Kröpfung 8, die in der besagten Einbaulage des Kontaktrings 10 (vgl. Fig. 2) in Längsrichtung des Stators 40 ausgerichtet ist. Der Kröpfungsabschnitt 9 umfasst eine Biegung 16 im Übergangsbereich zum ersten Umfangsabschnitt 6 einerseits und eine Biegung 16 im Übergangsbereich zum zweiten radialen Abschnitt 10 andererseits.

Der zweite Umfangsabschnitt 12 ist mit zwei im Wesentlichen kreisförmigen Anschlussflächen 14a, 14b zur Anbindung an die zwei Spulenwicklungen 28a, 28b versehen.

Jedes einzelne Element 2n, 2g erstreckt sich über einen Winkelbereich von ca. 100° bis 120°, vorzugsweise über ca. 115°.

Da es sich um identische Elemente 2n, 2g handelt, liegen auch die Kröpfungen 8 der jeweiligen normal angeordneten Elemente 2n in einer Ebene und die Kröpfungen 8 der jeweiligen dazu gewendet angeordneten Elemente 2g in einer anderen Ebene (vgl. Fig. 7).

Fig. 2 zeigt den Kontaktring 10 am Stator 40 eines bürstenlosen Gleichstrommotors 50. Der Stator 40 umfasst metallische Stator-Segmente 24, welche jeweils eine Spulenwicklung tragen. Die einzelnen Spulenwicklungen bilden in der Summe die Stator-Wicklung. Die Stator-Wicklung umfasst dabei in diesem Ausführungsbeispiel insgesamt drei Wicklungsstränge bzw. 6 Spulenwicklungen, die über eine elektronische Brückenschaltung bestromt werden.

Die einzelnen Elemente 2n, 2g sind mit einer ihrer beiden breiten Seiten zur Stirnseite des Stators 40 ausgerichtet. Der Kontaktring 10 ist dabei derart stirnseitig am Stator 40 angeordnet, dass er zum einen mittels der jeweiligen ersten Umfangsabschnitte 6 an einer Kunststoffumspritzung 26 des Stators 40 aufliegt, durch die er positioniert und fixiert ist. Zum anderen liegt der Kontaktring 10 mittels der jeweiligen kreisförmigen Anschlussflächen 14a, 14b der jeweiligen zweiten Umfangsabschnitte 12 an jeweils zwei Wicklungsdrähten 28a, 28b auf. Während einer dieser Wicklungsdrähte 28a den Anfang einer Spulenwicklung darstellt, stellt der andere Wicklungsdraht 28b das Ende einer anderen Spulenwicklung dar.

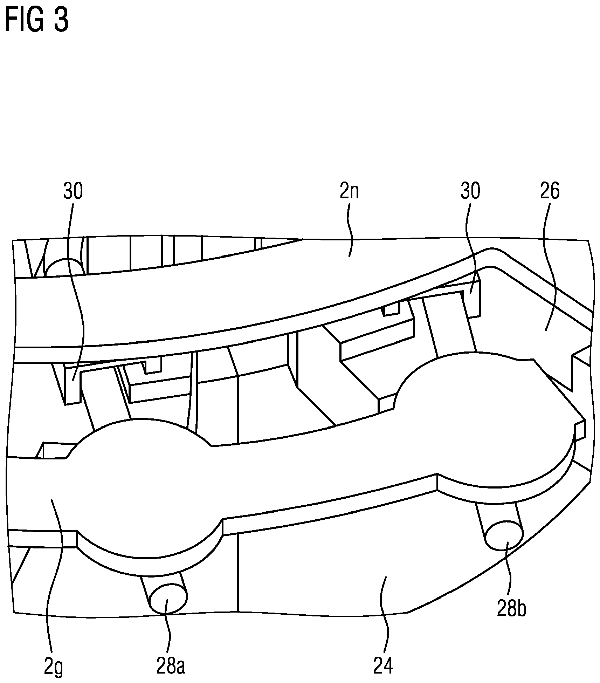

Fig. 3 zeigt, dass zwei einander zugewandte Elemente 2n, 2g zweier benachbarter Anschlussfahnen 20V, 20W gegeneinander elektrisch isoliert sind, um einen Kurzschluss zwischen den beiden stromführenden Elementen 2n, 2g zu unterbinden. Dies ist dadurch sichergestellt, dass in dem jeweiligen Bereich des ersten Umfangsabschnitts 6 auf der dem Stator 40 zugewandten Seite zwei Isoliermittel 30 vorgesehen sind, an welchen die beiden Wicklungsdrähte 28a, 28b anliegen.

Diese Isoliermittel 30 sind dabei aus einem Kunststoff in der Gestalt eines U-Profils ausgebildet, welches stirnseitig am Stator 26 angespritzt sein kann. Alternativ dazu können diese Isoliermittel 30 auch in die Kunststoffumspritzung 26 eingeklipst sein. Alternativ dazu können diese Isoliermittel 30 auch an dem jeweiligen Element 2n, 2g selbst angespritzt sein. Nach einer weiteren alternativen Ausgestaltung kann das jeweilige Element 2n, 2g zumindest im Bereich des ersten Umfangsabschnitts auch selbst isoliert sein, indem es entsprechend umspritzt wird.

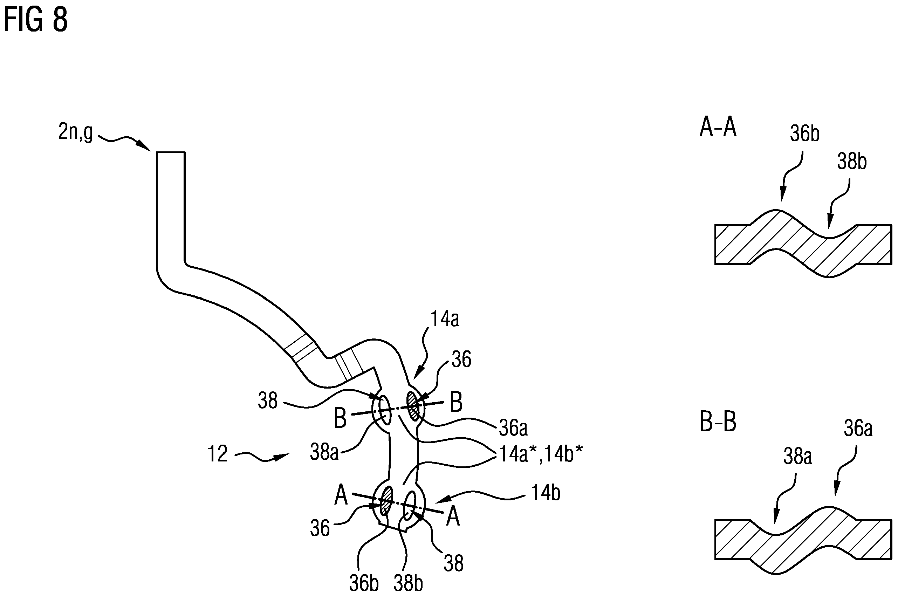

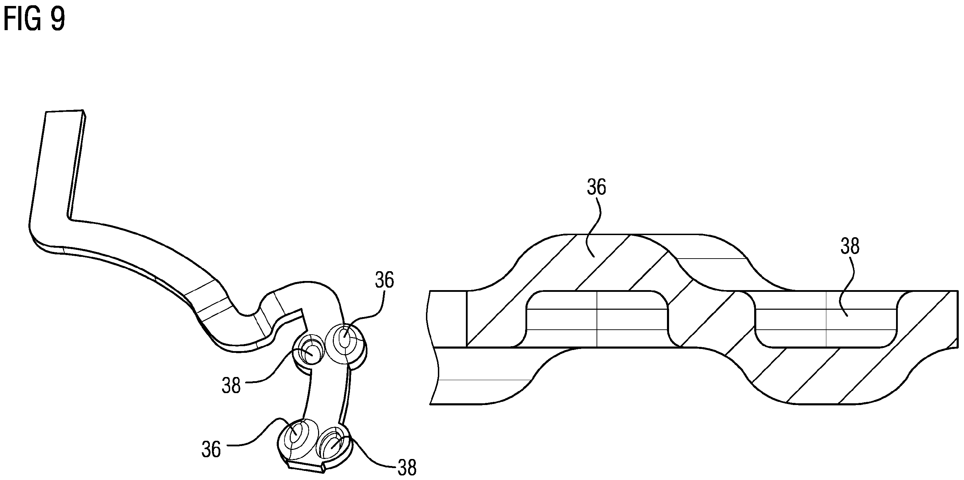

Fig. 8 und Fig. 9 veranschaulichen ein alternatives Kontaktringelement 2n, 2g mit im Wesentlichen kreisrunden Anschlussbereichen 14a*, 14b*, deren Anschlussflächen 14a, 14b mit Schweißbeulen 36, 38 versehen sind. Die Anschlussbereiche können grundsätzlich auch eine andere Formgebung aufweisen, die von der zuvor genannten im Wesentlichen kreisrunden Form abweicht, etwa eine viereckige oder mehreckige Form.

Je nach Betrachtung des Kontaktringelements 2n, 2g umfasst jede der Anschlussflächen 14a, 14b eine Erhebung 36 und eine Vertiefung 38. Eine sich in Bezug auf die normale Lage 2n als Erhebung 36 der Anschlussfläche 14a, 14b darstellende Schweißbeule, stellt sich in Bezug auf die zur normalen Lage 2n gewendete Lage 2g als Vertiefung 38 der Anschlussfläche 14a, 14b dar und umgekehrt.

Vergleicht man ferner die beiden Anschlussflächen 14a, 14b miteinander, so sind die Erhebungen 36a, 36b bzw. die Vertiefungen 38a, 38b in radialer Richtung zueinander versetzt ausgebildet. Dies wird im Einzelnen durch die beiden Schnittdarstellungen A - A und B - B veranschaulicht.

Grundsätzlich kann nach einem weiteren alternativen Kontaktringelement in Bezug auf die beiden Anschlussflächen auch nur eine einzige Schweißbeule - d. h., je nach Betrachtung eine Erhebung oder eine Vertiefung - vorgesehen sein.

Derartige Schweißbeulen bzw. Erhebungen oder Vertiefungen dienen dem Zweck, einen Schweißvorgang zu begünstigen.

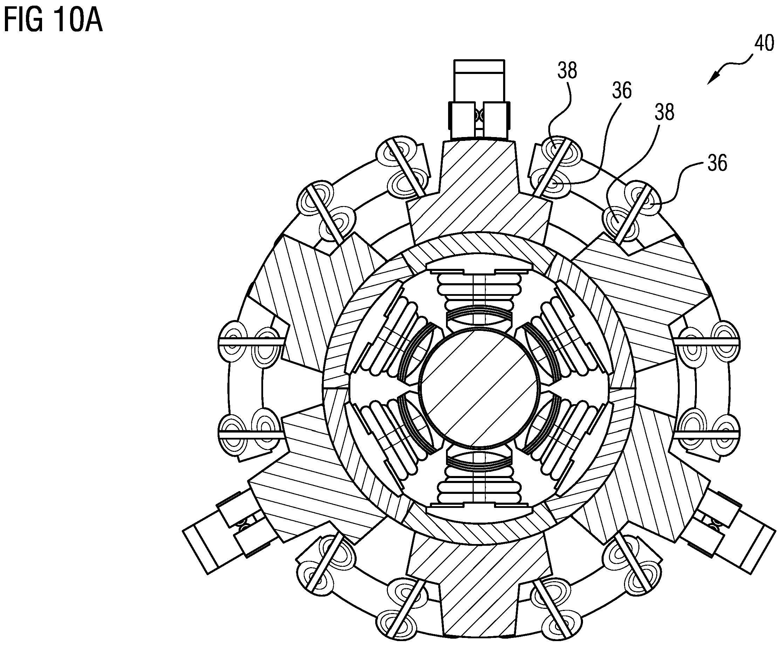

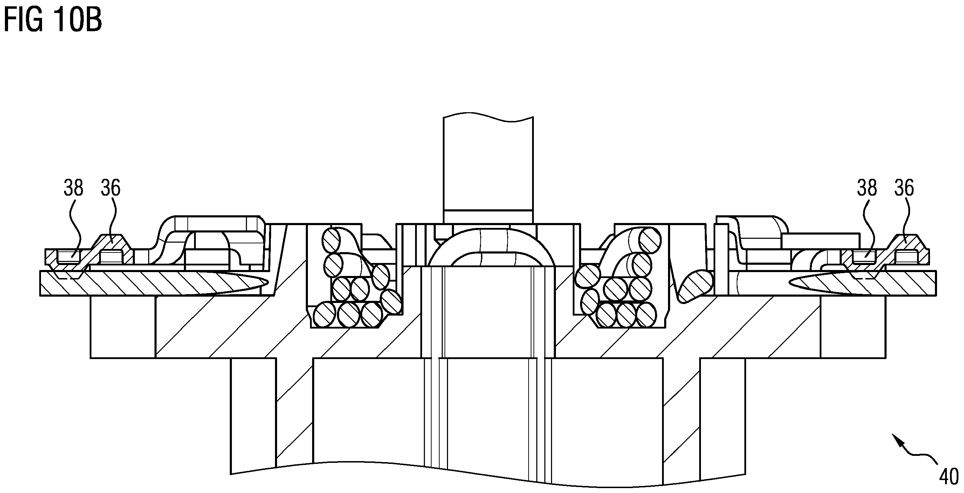

Fig. 10a und Fig. 10b veranschaulichen einen weiteren Stator 40 mit einem Kontaktring, der aus Kontaktringelementen der zuvor beschriebenen Art zusammengesetzt ist. Der Kontaktring weist dabei bezüglich der Anschlussbereiche 14a*, 14b* je zwei Schweißbeulen pro Anschlussfläche 14a, 14b auf. Man erkennt, dass die einzelnen Kontaktpunkte bzw. Schweißpunkte zwischen den Drähten und den Kontaktringelementen von der Lage des jeweiligen Kontaktringelements abhängen. Auch ist zu erkennen, dass immer nur eine der beiden Schweißbeulen pro Anschlussfläche 14a, 14b den Kontaktpunkt bzw. Schweißpunkt mit dem jeweils zugeordneten Draht ausbildet.

Auf die Funktionsweise eines solchen bürstenlosen Gleichstrommotors bzw. elektronisch kommutierten Elektromotors wird im Folgenden nicht näher eingegangen. Diese ist dem Fachmann bekannt.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

## Patentansprüche

1. Kontaktring zur Anordnung an einem Stator (40) eines elektronisch kommutierten Elektromotors, wobei der Kontaktring (10) aus zumindest zwei Paaren identischer, teilringförmiger, metallischer Elemente (2n, 2g) ausgebildet ist,
wobei jeweils eines der Paare mit einer Anschlussfahne (20U, 20V, 20W) zur Anbindung an eine Spannungsquelle verbunden ist,
und
wobei sich eines der beiden Elemente (2n) eines Paares (2n, 2g) von der Anschlussfahne (20U, 20V, 20W) in einer ersten normalen Lage in einer ersten Umfangsrichtung des Stators (40) erstreckt und das andere Element (2g) sich von der Anschlussfahne (20U, 20V, 20W) in einer zweiten, gegenüber der ersten normalen Lage gewendeten Lage in einer zweiten Umfangsrichtung des Stators (40) erstreckt,
wobei die einzelnen Elemente eine Kröpfung (8) aufweisen, so dass sich zwei einander zugewandte Elemente (2n, 2g) des Kontaktrings (10) zweier benachbarter Anschlussfahnen (20U, 20V, 20W) im Bereich der Kröpfung überlappen, ohne sich zu berühren.

2. Kontaktring nach Anspruch 1, wobei sich die Kröpfungen der einander zugewandten Elemente (2n, 2g) in einem gemeinsamen Kröpfungsbereich komplementär überlappen.

3. Kontaktring nach Anspruch 1 oder 2, wobei der Kontaktring (10) aus zumindest drei Paaren identischer, teilringförmiger, metallischer Elemente (2n, 2g) ausgebildet ist.

4. Kontaktring nach einem der vorhergehenden Ansprüche, dessen einzelne Elemente (2n, 2g) als flache Elemente ausgebildet sind, deren breite Seiten zur Stirnseite des Stators (40) ausgerichtet sind.

5. Kontaktring nach einem der vorhergehenden Ansprüche, wobei die Kröpfung (8) der einzelnen Elemente (2n, 2g) zwischen einem Anschlussfahnenende (3) und einem freien Ende (18) des Elements (2n, 2g) ausgebildet ist.

6. Kontaktring nach einem der vorhergehenden Ansprüche, wobei die Kröpfung (8) zur Längsrichtung des Stators (40) ausgerichtet ist.

7. Kontaktring nach einem der vorhergehenden Ansprüche, wobei die einzelnen Elemente (2n, 2g) in einzelne Abschnitte unterteilt sind und dabei aufweisen:
- einen ersten radialen Abschnitt (4) zur Anbindung an die Anschlussfahne (20U, 20V, 20W),
- einen sich an den ersten radialen Abschnitt anschließenden ersten Umfangsabschnitt (6),
- einen sich an den ersten Umfangsabschnitt anschließenden, die Kröpfung (8) aufweisenden Kröpfungsabschnitt (9),
- einen sich an den Kröpfungsabschnitt anschließenden zweiten radialen Abschnitt (10) und
- einen sich an den zweiten radialen Abschnitt anschließenden zweiten Umfangsabschnitt (12) zur Anbindung an eine Stator-Wicklung.

8. Kontaktring nach Anspruch 7, wobei die einzelnen Abschnitte (4, 6, 10, 12) bis auf die Kröpfung (8) des Kröpfungsabschnitts in einer Ebene liegen.

9. Kontaktring nach Anspruch 7 oder 8, wobei der Kröpfungsabschnitt (9) gegenüber den übrigen Abschnitten (4, 6, 10, 12) tiefgezogen ist.

10. Kontaktring nach einem der Ansprüche 7 bis 9, wobei einer der beiden Umfangsabschnitte (6, 12) gegenüber dem anderen Umfangsabschnitt (6, 12) innenliegend angeordnet ist.

11. Kontaktring nach Anspruch 10, wobei der erste Umfangsabschnitt (6) gegenüber dem zweiten Umfangsabschnitt (12) innenliegend angeordnet ist.

12. Kontaktring nach einem der Ansprüche 7 bis 11, wobei der zweite Umfangsabschnitt (12) mit zwei Anschlussflächen, vorzugsweise mit zwei kreisförmigen Anschlussflächen (14a, 14b) zur Anbindung an die Stator-Wicklung versehen ist.

13. Kontaktring nach einem der vorhergehenden Ansprüche, wobei sich jedes einzelne Element (2n, 2g) über einen Winkelbereich von ca. 100° bis 120° erstreckt, vorzugsweise über im Wesentlichen 115°.

14. Kontaktring nach einem der vorhergehenden Ansprüche, wobei jedes der Elemente (2n, 2g) als Stanzblechelement ausgebildet ist.

15. Kontaktring nach einem der vorhergehenden Ansprüche, wobei die zwei einander zugewandten Elemente (2n, 2g) zweier benachbarter Anschlussfahnen (20U, 20V, 20W) gegeneinander elektrisch isoliert sind, indem im Bereich des ersten Umfangsabschnitts (6) auf der dem Stator (40) zugewandten Seite ein Isoliermittel (30) vorgesehen ist, an welchem ein Wickelungsdraht (28a, 28b) der Stator-Wicklung anliegt.

16. Kontaktring nach Anspruch 15, wobei das Isoliermittel (30) aus einem Kunststoff, vorzugsweise in der Gestalt eines U-Profils ausgebildet ist, welches stirnseitig am Stator (26) angespritzt oder in den Stator (26) eingeklipst ist.

17. Stator eines elektronisch kommutierten Elektromotors mit einem Kontaktring (10) nach einem der Ansprüche 1 bis 15.

18. Elektromotor mit einem Stator (40) nach Anspruch 17.

## Claims

1. Contact ring for arranging on a stator (40) of an electronically commutated electric motor, the contact ring (10) being configured from at least two pairs of identical, part-annular, metallic elements (2n, 2g),
in each case one of the pairs being connected to a terminal lug (20U, 20V, 20W) for attaching to a voltage source,
and
one of the two elements (2n) of a pair (2n, 2g) extending from the terminal lug (20U, 20V, 20W) in a first circumferential direction of the stator (40) in a first normal position, and the other element (2g) extending from the terminal lug (20U, 20V, 20W) in a second circumferential direction of the stator (40) in a second position which is turned with respect to the first normal position,
the individual elements having an offset (8), with the result that two elements (2n, 2g) of the contact ring (10) which face one another of two adjacent terminal lugs (20U, 20V, 20W) overlap in the region of the offset without coming into contact.

2. Contact ring according to Claim 1, the offsets of the elements (2n, 2g) which face one another overlapping in a complementary manner in a common offset region.

3. Contact ring according to Claim 1 or 2, the contact ring (10) being configured from at least three pairs of identical, part-annular, metallic elements (2n, 2g).

4. Contact ring according to one of the preceding claims, the individual elements (2n, 2g) of which are configured as flat elements, the broad sides of which are oriented toward the end side of the stator (40).

5. Contact ring according to one of the preceding claims, the offset (8) of the individual elements (2n, 2g) being configured between a terminal lug end (3) and a free end (18) of the element (2n, 2g).

6. Contact ring according to one of the preceding claims, the offset (8) being oriented toward the longitudinal direction of the stator (40).

7. Contact ring according to one of the preceding claims, the individual elements (2n, 2g) being divided into individual sections and in the process having:
- a first radial section (4) for attaching to the terminal lug (20U, 20V, 20W),
- a first circumferential section (6) which adjoins the first radial section,
- an offset section (9) which adjoins the first circumferential section and has the offset (8),
- a second radial section (10) which adjoins the offset section, and
- a second circumferential section (12) which adjoins the second radial section for attaching to a stator winding.

8. Contact ring according to Claim 7, the individual sections (4, 6, 10, 12) lying in one plane apart from the offset (8) of the offset section.

9. Contact ring according to Claim 7 or 8, the offset section (9) being deep-drawn with respect to the remaining sections (4, 6, 10, 12).

10. Contact ring according to one of Claims 7 to 9, one of the two circumferential sections (6, 12) being arranged so as to lie on the inside with respect to the other circumferential section (6, 12).

11. Contact ring according to Claim 10, the first circumferential section (6) being arranged so as to lie on the inside with respect to the second circumferential section (12).

12. Contact ring according to one of Claims 7 to 11, the second circumferential section (12) being provided with two connector faces, preferably with two circular connector faces (14a, 14b) for attaching to the stator winding.

13. Contact ring according to one of the preceding claims, each individual element (2n, 2g) extending over an angular range of from approximately 100° to 120°, preferably over substantially 115°.

14. Contact ring according to one of the preceding claims, each of the elements (2n, 2g) being configured as a stamped sheet metal element.

15. Contact ring according to one of the preceding claims, the two elements (2n, 2g) which face one another of two adjacent terminal lugs (20U, 20V, 20W) being insulated electrically with respect to one another, by an insulating means (30) being provided in the region of the first circumferential section (6) on the side which faces the stator (40), against which insulating means (30) a winding wire (28a, 28b) of the stator winding bears.

16. Contact ring according to Claim 15, the insulating means (30) being configured from a plastic, preferably in the shape of a U-profile, which is molded on the stator (26) on the end side or is clipped into the stator (26).

17. Stator of an electronically commutated electric motor having a contact ring (10) according to one of Claims 1 to 15.

18. Electric motor having a stator (40) according to Claim 17.

## Revendications

1. Anneau de contact destiné à être disposé sur un stator (40) d'un moteur électrique à commutation électronique, l'anneau de contact (10) étant constitué d'au moins deux paires d'éléments métalliques identiques en forme d'anneaux partiels (2n, 2g),
à chaque fois l'une des paires étant connectée à une patte de raccordement (20U, 20V, 20W) pour la connexion à une source de tension, et
l'un des deux éléments (2n) d'une paire (2n, 2g) s'étendant depuis la patte de raccordement (20U, 20V, 20W) dans une première position normale dans une première direction périphérique du stator (40) et l'autre élément (2g) s'étendant depuis la patte de raccordement (20U, 20V, 20W) dans une deuxième position tournée par rapport à la première position normale dans une deuxième direction périphérique du stator (40),
les éléments individuels présentant un coude (8) de telle sorte que deux éléments (2n, 2g) tournés l'un vers l'autre de l'anneau de contact (10) de deux pattes de raccordement adjacentes (20U, 20V, 20W) se chevauchent dans la région du coude sans venir en contact.

2. Anneau de contact selon la revendication 1, dans lequel les coudes des éléments (2n, 2g) tournés l'un vers l'autre se chevauchent de manière complémentaire dans une région de coude commune.

3. Anneau de contact selon la revendication 1 ou 2, l'anneau de contact (10) étant réalisé à partir d'au moins trois paires d'éléments métalliques identiques en forme d'anneaux partiels (2n, 2g) .

4. Anneau de contact selon l'une quelconque des revendications précédentes, dont les éléments individuels (2n, 2g) sont réalisés sous forme d'éléments plats dont les côtés larges sont orientés vers le côté frontal du stator (40).

5. Anneau de contact selon l'une quelconque des revendications précédentes, dans lequel le coude (8) des éléments individuels (2n, 2g) est réalisé entre une extrémité de patte de raccordement (3) et une extrémité libre (18) de l'élément (2n, 2g).

6. Anneau de contact selon l'une quelconque des revendications précédentes, dans lequel le coude (8) est orienté vers la direction longitudinale du stator (40).

7. Anneau de contact selon l'une quelconque des revendications précédentes, dans lequel les éléments individuels (2n, 2g) sont divisés en portions individuelles et présentent en l'occurrence :
- une première portion radiale (4) pour le raccordement à la patte de raccordement (20U, 20V, 20W),
- une première portion périphérique (6) se raccordant à la première portion radiale,
- une portion de coude (9) se raccordant à la première portion périphérique, présentant le coude (8),
- une deuxième portion radiale (10) se raccordant à la portion de coude et
- une deuxième portion périphérique (12) se raccordant à la deuxième portion radiale pour le raccordement à un enroulement de stator.

8. Anneau de contact selon la revendication 7, dans lequel les portions individuelles (4, 6, 10, 12) à l'exception du coude (8) de la portion de coude se situent dans un plan.

9. Anneau de contact selon la revendication 7 ou 8, dans lequel la portion de coude (9) est emboutie profond par rapport aux autres portions (4, 6, 10, 12).

10. Anneau de contact selon l'une quelconque des revendications 7 à 9, dans lequel l'une des deux portions périphériques (6, 12) est disposée à l'intérieur par rapport à l'autre portion périphérique (6, 12).

11. Anneau de contact selon la revendication 10, dans lequel la première portion périphérique (6) est disposée à l'intérieur par rapport à la deuxième portion périphérique (12).

12. Anneau de contact selon l'une quelconque des revendications 7 à 11, dans lequel la deuxième portion périphérique (12) est pourvue de deux surfaces de raccordement, de préférence de deux surfaces de raccordement circulaires (14a, 14b) pour le raccordement à l'enroulement de stator.

13. Anneau de contact selon l'une quelconque des revendications précédentes, dans lequel chaque élément individuel (2n, 2g) s'étend sur une plage angulaire d'environ 100° à 120°, de préférence sur essentiellement 115°.

14. Anneau de contact selon l'une quelconque des revendications précédentes, dans lequel chacun des éléments (2n, 2g) est réalisé sous forme d'élément en tôle estampée.

15. Anneau de contact selon l'une quelconque des revendications précédentes, dans lequel les deux éléments tournés l'un vers l'autre (2n, 2g) de deux pattes de raccordement adjacentes (20U, 20V, 20W) sont isolés électriquement l'un de l'autre en prévoyant un moyen d'isolation (30) dans la région de la première portion périphérique (6) sur le côté tourné vers le stator (40), sur lequel moyen d'isolation s'applique un fil d'enroulement (28a, 28b) de l'enroulement de stator.

16. Anneau de contact selon la revendication 15, dans lequel le moyen d'isolation (30) est constitué d'un plastique, de préférence en forme de profilé en U, lequel est surmoulé du côté frontal sur le stator (26) ou qui est enclipsé dans le stator (26).

17. Stator d'un moteur électrique à commutation électronique comprenant un anneau de contact (10) selon l'une quelconque des revendications 1 à 15.

18. Moteur électrique comprenant un stator (40) selon la revendication 17.
